# DEMANDE DE BREVET EUROPEEN

(11) **EP 3 217 290 A1**
(43) Date de publication de la demande: **13.09.2017**
(21) Numéro de dépôt: 17156895.9
(22) Date de dépôt: 20.02.2017
(51) Int. Cl.: G06F 13/28

(54) **SYSTEME SUR PUCE ET PROCEDE D'ECHANGE DE DONNEES ENTRE NOEUDS DE CALCULS D'UN TEL SYSTEME SUR PUCE**

(30) Priorité: 11.03.2016 FR 1652043
(71) Demandeur: Commissariat à l'énergie atomique et aux énergies alternatives, 75015 Paris (FR)
(72) Inventeur: RAUPP DA ROSA, Thiago, 38000 Grenoble (FR); LEMAIRE, Romain, 38000 Grenoble (FR); CLERMIDY, Fabien, 38120 Saint-Égrève (FR)
(74) Mandataire: Bonnet, Michel

(57) **Abrégé**

Ce système comporte au moins un noeud de calcul (302) comportant une mémoire (312), un processeur (310) lisant/écrivant des données dans une zone de travail (318) de la mémoire et un contrôleur DMA (314) comportant un récepteur (322) recevant des données provenant de l'extérieur et les écrivant dans une zone de partage (320) de la mémoire ou un émetteur lisant des données dans ladite zone de partage et les transmettant vers l'extérieur.

Un mécanisme de requêtes en écriture et lecture est prévu pour engendrer, sur requête du processeur, un transfert de données, par le contrôleur DMA, entre la zone de partage et la zone de travail. Le contrôleur DMA comporte un dispositif émetteur/récepteur supplémentaire conçu pour échanger des données entre l'extérieur et la zone de travail, sans transiter par la zone de partage.

## Description

La présente invention concerne un système sur puce comportant une pluralité de noeuds de calculs interconnectés en réseau. Elle concerne également un procédé d'échange de données entre noeuds de calculs d'un tel système sur puce et un programme d'ordinateur correspondant.

Dans ce type de système, les communications sont généralement traitées en flot de données. Différents processeurs ou blocs matériels de traitement de différents noeuds de calculs réalisent des traitements sur des données qui sont transmises séquentiellement d'un processeur ou bloc matériel de traitement à l'autre. Par « bloc matériel de traitement », on entend un dispositif matériel dans lequel les traitements sont réalisés par des circuits électroniques figés et non par un processeur exécutant un programme d'ordinateur. Les ressources de mémoires et de calculs étant distribuées, il n'y a pas de lien physique dédié pour chaque échange de données mais un ensemble de processeurs ou blocs matériels de traitement qui partagent une infrastructure de communication en réseau et des espaces de stockage répartis dans le réseau. Il s'agit donc de concevoir des mécanismes et des protocoles permettant d'optimiser le fonctionnement des échanges de données.

En particulier, deux propriétés sensibles doivent être prises en considération lorsque l'on souhaite optimiser les communications dans de tels systèmes :
- la latence, ou le temps qui s'écoule entre l'envoi d'une donnée et sa réception,
- le coût en termes de consommation énergétique.

Plus les latences de communications sont élevées, plus le temps d'exécution d'une application augmente ce qui nuit directement aux performances du système. Mais l'objectif est aussi de concevoir un système permettant de réduire la dépense énergétique pour chaque envoi de données. Il existe donc un compromis à trouver entre performance et consommation énergétique dans l'implémentation des mécanismes et protocoles de communication.

Une première approche logicielle pour optimiser les communications au sein de systèmes sur puces est proposée dans de nombreuses études. Dans les noeuds de calculs à processeurs, les communications sont alors entièrement traitées par les processeurs eux-mêmes. Pour simplifier la programmation, des interfaces API (de l'anglais « Application Programming Interface ») dédiées aux communications sont proposées. On peut par exemple citer l'API MPI (de l'anglais « Message Passing Interface ») ou MCAPI (de l'anglais « Multicore Communications API »). Bien que cette première approche permette une flexibilité avantageuse, notamment à l'aide d'interfaces API à granularité variable et compatibles avec des traitements en flot de données, les latences de communications restent élevées à cause des traitements logiciels. De plus, les communications prennent du temps de traitement sur les processeurs ce qui pénalise les calculs qu'ils doivent réaliser.

Une deuxième approche matérielle est également proposée dans de nombreuses études. Elle se base généralement sur l'utilisation d'un contrôleur d'accès direct en mémoire dans chaque noeud de calcul à processeur, ou contrôleur DMA (de l'anglais « Direct Memory Access »), qui permet de réaliser des accès directs à la mémoire distribuée et partagée sans nécessiter l'intervention d'un processeur du noeud de calcul. Plus précisément, le processeur concerné par un échange de données se limite à l'envoi d'une requête pour lancer un échange entre une mémoire source et une mémoire destination. En mode « push », le processeur commande le contrôleur DMA de son noeud de calcul pour l'envoi de données depuis une mémoire locale vers une mémoire distante. En mode « pull », le processeur commande le contrôleur DMA pour la réception de données depuis une mémoire distante dans une mémoire locale. Bien que cette deuxième approche permette une accélération des échanges et des calculs, elle comporte généralement plusieurs inconvénients : nécessité pour un processeur de configurer le contrôleur DMA local pour chaque échange de données et de manipuler les adresses source et destination à l'aide de pointeurs ; pas de flexibilité car pas d'API à granularité variable.

D'autres approches matérielles et/ou logicielles sont également proposées, comme par exemple celle de l'article de Han et al, intitulé « An efficient scalable and flexible data transfer architecture for multiprocessor SoC with massive distributed memory », publié dans Proceedings of the 41st annual Design Automation Conference, pages 250-255, 7-11 juillet 2004. Dans cet article, une approche matérielle sans contrôleur DMA est proposée : un serveur global de mémoire distribuée est intégré dans le réseau et chaque noeud de calcul est muni d'un point d'accès prédéterminé à ce serveur global pour tout transfert de données. Mais chaque point d'accès est réalisé avec une mémoire locale dédiée. Ceci représente un coût en termes de logique et réduit la flexibilité puisque l'allocation des ressources mémoires est figée et ne peut être fonction du nombre de ports nécessaires à une application visée. En outre, tout transfert de données initié par un processeur nécessite pour ce dernier de connaitre l'adresse source ainsi que l'adresse destination.

L'invention s'applique plus particulièrement à un système sur puce conçu sur la base de la deuxième approche, dans lequel au moins un noeud de calcul comporte :
- au moins une mémoire,
- au moins un processeur de traitement de données conçu pour lire des données dans une zone de travail de ladite au moins une mémoire, traiter des données lues et écrire des données traitées dans la zone de travail, et
- un contrôleur d'accès direct en mémoire comportant :
   - un récepteur conçu pour recevoir des données provenant de l'extérieur du noeud de calcul via le réseau et pour les écrire dans une zone de partage de ladite au moins une mémoire (mode « pull »), ou
   - un émetteur conçu pour lire des données dans la zone de partage et pour les transmettre vers l'extérieur du noeud de calcul via le réseau (mode « push »).

Bien entendu, un contrôleur d'accès direct en mémoire d'un noeud de calcul à processeur fonctionne avantageusement dans les deux modes « push » et « pull », de sorte qu'il comporte généralement, sans que cela ne soit une nécessité, un récepteur et un émetteur tels que définis ci-dessus.

Un système sur puce de ce type est par exemple divulgué dans le brevet européen EP 2 585 931 B1. Mais la zone de travail du processeur d'un noeud de calcul est incluse dans la zone de partage du contrôleur d'accès direct en mémoire, de sorte qu'il doit être prévu une gestion de pointeurs de lecture et d'écriture, partagée entre le processeur et le contrôleur, pour éviter tout conflit de lecture ou d'écriture dans la zone de travail. Ainsi le processeur n'est pas libéré de toute gestion de pointeurs et cela le freine dans ses autres tâches.

Une solution à ce problème est apportée dans l'article de Kumar et al, intitulé « Low overhead message passing for high performance many-core processors », publié dans Proceedings of the 1st International Symposium on Computing and Networking (CANDAR), pages 345-351, 4-6 décembre 2013. Il y est décrit un système du même type, dans lequel un outil d'interface matériel est ajouté à chaque contrôleur d'accès direct en mémoire de chaque noeud de calcul à processeur pour gérer spécifiquement la zone de partage appelée « MPB » (de l'anglais « Message Passing Buffer »). Un système de traduction d'adresses intégré permet de gérer les adresses source et destination indépendamment d'un noeud de calcul à l'autre. Cette couche matérielle en supplément du contrôleur d'accès direct en mémoire libère le processeur de la gestion des pointeurs d'écriture et lecture dans la zone de partage sans les inconvénients d'une interface logicielle. En d'autres termes, la zone de partage MPB n'a plus besoin d'être accédée en lecture et écriture par le processeur et un mécanisme de requêtes en écriture et lecture entre le contrôleur d'accès direct en mémoire et le processeur est mis en place pour engendrer, sur requête du processeur, un transfert de données, par l'outil d'interface matériel du contrôleur d'accès direct en mémoire, entre la zone de partage MPB et la zone de travail du processeur.

Il en résulte cependant qu'à chaque transfert de données entre deux processeurs de noeuds de calculs différents, il convient de gérer deux zones de partage MPB, l'une du côté du noeud émetteur et l'autre du côté du noeud récepteur. Ce mécanisme, bien qu'avantageux en termes de soulagement du processeur et de compatibilité avec des communications traitées en flot de données, ajoute finalement de la latence et de la consommation énergétique.

Il peut ainsi être souhaité de prévoir un système sur puce qui permette de s'affranchir d'au moins une partie des problèmes et contraintes précités.

Il est donc proposé un système sur puce comportant une pluralité de noeuds de calculs interconnectés en réseau, dans lequel au moins un noeud de calcul comporte :
- au moins une mémoire,
- au moins un processeur de traitement de données conçu pour lire des données dans une zone de travail de ladite au moins une mémoire, traiter des données lues et écrire des données traitées dans la zone de travail.
- un contrôleur d'accès direct en mémoire comportant :
   - un récepteur conçu pour recevoir des données provenant de l'extérieur du noeud de calcul via le réseau et pour les écrire dans une zone de partage de ladite au moins une mémoire, ou
   - un émetteur conçu pour lire des données dans ladite zone de partage et pour les transmettre vers l'extérieur du noeud de calcul via le réseau,
et dans lequel il est prévu un mécanisme de requêtes en écriture et lecture entre le contrôleur d'accès direct en mémoire et le processeur pour engendrer, sur requête du processeur, un transfert de données, par le contrôleur d'accès direct en mémoire, entre la zone de partage et la zone de travail de ladite au moins une mémoire, dans lequel, en outre, le contrôleur d'accès direct en mémoire comporte un dispositif émetteur ou récepteur supplémentaire conçu pour échanger des données entre l'extérieur du noeud de calcul via le réseau et la zone de travail du processeur, sans transiter par la zone de partage.

Ainsi, cet émetteur ou récepteur supplémentaire dans le contrôleur d'accès direct en mémoire permet de court-circuiter l'une des deux zones de partage, du côté du noeud émetteur ou du noeud récepteur, lorsque l'autre des deux zones de partage (respectivement du côté du noeud récepteur ou du noeud émetteur) est sollicitée au cours d'un échange de données entre processeurs de noeuds de calculs différents. Il est même possible d'envisager de solliciter la zone de partage d'un autre noeud de calcul que les noeuds émetteur et récepteur, en court-circuitant alors les deux zones de partage des noeuds émetteur et récepteur grâce à leurs émetteurs/récepteurs supplémentaires.

De façon optionnelle, le contrôleur d'accès direct en mémoire dudit au moins un noeud de calcul comporte :
- le récepteur conçu pour recevoir des données provenant de l'extérieur du noeud de calcul via le réseau et pour les écrire dans la zone de partage,
- l'émetteur conçu pour lire des données dans ladite zone de partage et pour les transmettre vers l'extérieur du noeud de calcul via le réseau, et
- un dispositif émetteur et récepteur supplémentaire conçu pour échanger des données entre l'extérieur du noeud de calcul via le réseau et la zone de travail du processeur, sans transiter par la zone de partage.

De façon optionnelle également, ladite au moins une mémoire dudit au moins un noeud de calcul comporte :
- une table de connexion définie de manière à associer, pour chaque connexion impliquant l'un dudit au moins un processeur et établie pour échanger des données avec un autre processeur ou bloc matériel de traitement extérieur audit au moins un noeud de calcul, un identifiant de cette connexion à un identifiant de cet autre processeur ou bloc matériel de traitement extérieur, et
- une table de partage définie de manière à associer chaque identifiant de connexion à une zone de mémoire tampon réservée pour cette connexion dans la zone de partage.

Le système est ainsi capable de gérer parallèlement plusieurs connexions par noeud de calcul en mode connecté.

De façon optionnelle également :
- les communications entre noeuds de calculs sont traitées en flot de données,
- ladite au moins une mémoire dudit au moins un noeud de calcul comporte une table de crédits définie de manière à associer chaque identifiant de connexion à un compteur de crédits disponibles pour cette connexion, et
- le contrôleur d'accès direct en mémoire dudit au moins un noeud de calcul comporte un gestionnaire de crédits pour la mise à jour du compteur de crédits de chaque connexion en cours en fonction des échanges réalisés pendant cette connexion.

Le système est ainsi capable de réguler efficacement les communications traitées en flot de données.

De façon optionnelle également, le gestionnaire de crédits est conçu pour initialiser chaque compteur de crédits en fonction de la taille de la zone de mémoire tampon réservée pour chaque connexion.

De façon optionnelle également, au moins l'un des éléments suivants dudit au moins noeud de calcul :
- le récepteur conçu pour recevoir des données provenant de l'extérieur du noeud de calcul via le réseau et pour les écrire dans la zone de partage, ou
- l'émetteur conçu pour lire des données dans ladite zone de partage et pour les transmettre vers l'extérieur du noeud de calcul via le réseau, et
- le dispositif émetteur ou récepteur supplémentaire conçu pour échanger des données entre l'extérieur du noeud de calcul via le réseau et la zone de travail du processeur sans transiter par la zone de partage,
est conçu sous la forme d'un bloc matériel formant une machine à états finis.

La latence est ainsi davantage réduite.

De façon optionnelle également, la zone de travail de ladite au moins une mémoire comporte un registre interne au processeur.

De façon optionnelle également, la zone de partage est configurée pour être inaccessible en lecture et écriture par le processeur.

Il est également proposé un procédé d'échange de données entre un noeud de calcul émetteur et un noeud de calcul récepteur d'un système sur puce comportant une pluralité de noeuds de calculs interconnectés en réseau, au moins l'un des noeuds de calcul émetteur et récepteur comportant :
- au moins une mémoire,
- au moins un processeur de traitement de données conçu pour lire des données dans une zone de travail de ladite au moins une mémoire, traiter des données lues et écrire des données traitées dans la zone de travail,
- un contrôleur d'accès direct en mémoire comportant :
   - un récepteur conçu pour recevoir des données provenant de l'extérieur du noeud de calcul via le réseau et pour les écrire dans une zone de partage de ladite au moins une mémoire, ou
   - un émetteur conçu pour lire des données dans ladite zone de partage et pour les transmettre vers l'extérieur du noeud de calcul via le réseau,
le procédé prévoyant un mécanisme de requêtes en écriture et lecture entre le contrôleur d'accès direct en mémoire et le processeur d'un même noeud de calcul pour engendrer, sur requête du processeur, un transfert de données, par le contrôleur d'accès direct en mémoire, entre la zone de partage et la zone de travail de ladite au moins une mémoire,
le procédé prévoyant en outre que, lors d'un échange de données, au moins l'un desdits noeuds de calculs émetteur et récepteur sollicite un dispositif émetteur ou récepteur supplémentaire de son contrôleur d'accès direct en mémoire pour échanger les données entre l'extérieur de ce noeud de calcul via le réseau et la zone de travail de son processeur, sans transiter par sa zone de partage.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé d'échange de données entre noeuds de calculs d'un système sur puce selon l'invention, lorsque ledit programme est exécuté par un noeud de calcul du système sur puce.

L'invention sera mieux comprise à l'aide de la description qui va suivre, donnée uniquement à titre d'exemple et faite en se référant aux dessins annexés dans lesquels :
- la figure 1 représente schématiquement la structure générale d'un exemple de système sur puce à noeuds de calculs interconnectés en réseau,
- la figure 2 illustre un exemple de chaîne de traitement de données pouvant être réalisée par le système sur puce de la figure 1,
- la figure 3 représente schématiquement la structure générale d'un noeud de calcul du système sur puce de la figure 1, selon un premier mode de réalisation de l'invention,
- la figure 4 représente schématiquement la structure générale d'un noeud de calcul du système de la figure 1, selon un deuxième mode de réalisation de l'invention,
- la figure 5 illustre un transfert de données entre deux noeuds de calculs conformes à la structure générale de la figure 3,
- la figure 6 illustre les étapes successives du transfert de données de la figure 5,
- la figure 7 illustre un transfert de données entre deux noeuds de calculs conformes à la structure générale de la figure 4, et
- la figure 8 illustre les étapes successives du transfert de données de la figure 7.

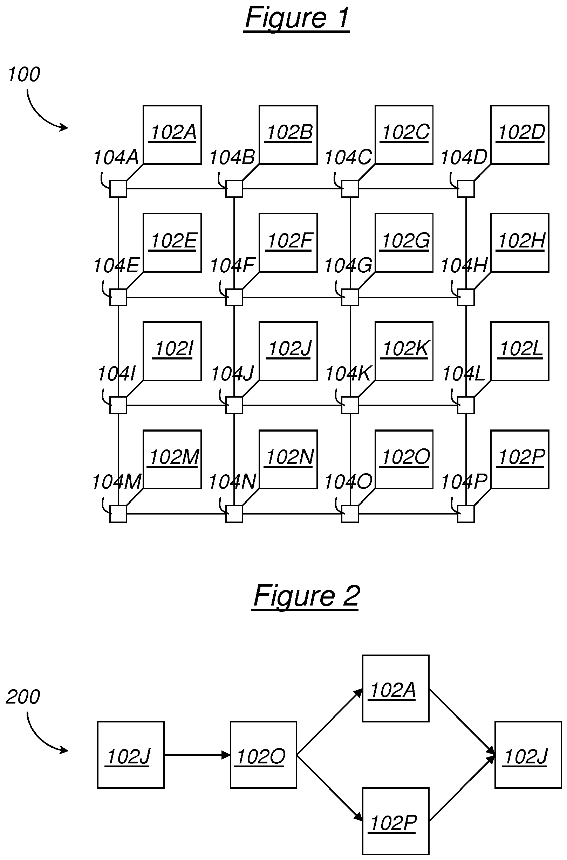

Le système sur puce 100 illustré sur la figure 1 comporte une pluralité de noeuds de calculs 102A, ..., 102P interconnectés en réseau à l'aide de routeurs 104A, ..., 104P. Ces routeurs 104A, ..., 104P sont connectés entre eux et chacun d'eux est en outre connecté à un noeud de calcul respectif. En variante, et comme c'est d'ailleurs généralement le cas en pratique, chaque routeur peut être connecté à plusieurs noeuds de calculs. Ainsi, des données peuvent être échangées entre les noeuds de calculs 102A, ..., 102P par l'intermédiaire des routeurs 104A, ..., 104P de manière indépendante d'un échange à l'autre. Cette architecture est distribuée et particulièrement bien adaptée au traitement des communications en flot de données.

Chacun des noeuds de calculs 102A, 102B, ..., 102P comporte au moins un processeur ou bloc matériel de traitement. Chaque processeur peut être générique ou spécialisé dans le traitement de signaux, qualifié dans ce dernier cas de DSP (de l'anglais « Digital Signal Processor »). Il met en oeuvre un programme d'ordinateur de traitement de données.

Par ailleurs, le système sur puce 100 peut être configuré pour former une chaîne de traitement, c'est-à-dire un enchaînement d'au moins certains des noeuds de calculs 102A, ..., 102P. A cet effet, chaque noeud de calcul de la chaîne de traitement souhaitée est configuré pour émettre les données qu'il a traitées en flot de données au(x) noeud(s) de calcul(s) suivant(s) dans la chaîne de traitement. Cette configuration peut être établie par l'un des processeurs de l'un des noeuds de calculs du système sur puce 100.

Un exemple non limitatif de chaîne de traitement 200 est illustré sur la figure 2. Dans cet exemple, la chaîne de traitement 200 est constituée du noeud de calcul 102J, suivi du noeud de calcul 1020, suivi des noeuds de calculs 102A et 102P en parallèle, ces deux derniers étant suivis par le noeud de calcul 102J.

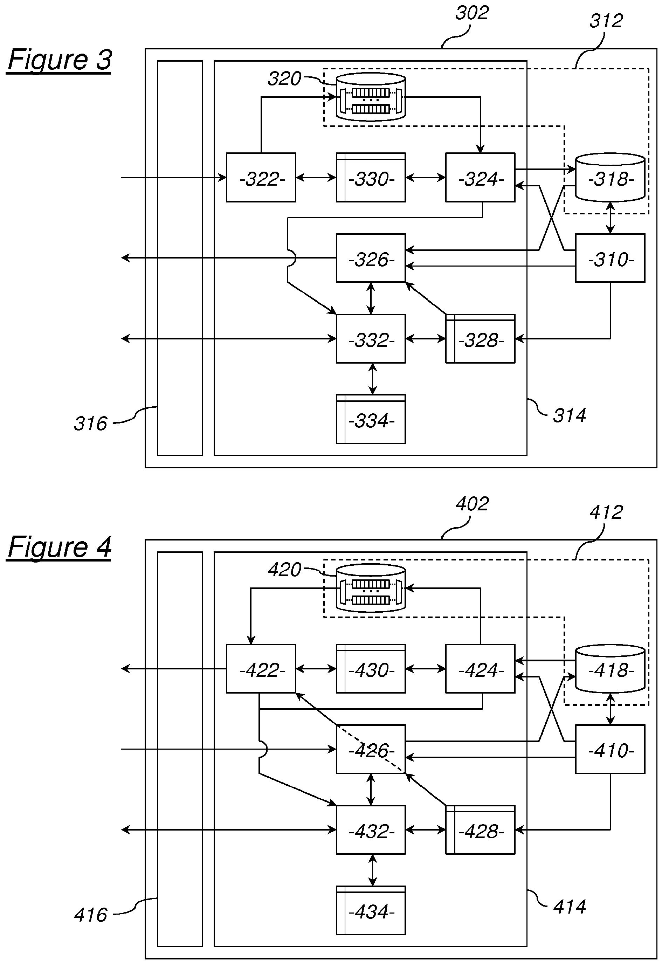

L'un des noeuds de calculs du système sur puce 100 est représenté schématiquement sur la figure 3, selon un premier mode de réalisation de l'invention. Il est identifié par la référence générique 302. Il s'agit d'un noeud de calcul à processeur. Ce noeud de calcul 302 comporte ainsi au moins un processeur 310 de traitement de données, au moins une mémoire 312 pour le stockage de données, un contrôleur 314 d'accès direct en mémoire, dit contrôleur DMA 314, et une interface 316 d'entrée/sortie de données. Le système sur puce 100 comporte au moins un noeud de calcul de ce type, sachant que tous les noeuds de calculs 102A, ..., 102P peuvent être de ce type.

Dans le mode de réalisation non limitatif de la figure 3, un seul processeur 310 est illustré mais il pourrait y en avoir plusieurs dans le même noeud de calcul 302. Par ailleurs, la mémoire 312 est représentée comme comportant une première mémoire 318, ou zone de mémoire, dite zone de travail, à laquelle le processeur 310 peut accéder en lecture et écriture, et une deuxième mémoire 320, ou zone de mémoire, dite zone de partage, à laquelle le contrôleur DMA 314 peut accéder en lecture ou écriture. La zone de travail 318 est représentée comme une mémoire autonome extérieure au processeur 310, mais elle pourrait en variante être constituée d'un registre interne au processeur 310. La zone de partage 320 est représentée comme une mémoire interne du contrôleur DMA 314, mais elle pourrait en variante être extérieure, autonome ou combinée avec la zone de travail 318 en une seule et même mémoire. Dans cette dernière configuration, le processeur 310 et le contrôleur DMA 314 pourraient avoir accès à cette seule et même mémoire à l'aide d'un bus de transmission de données (non illustré). D'une façon générale, de nombreuses configurations sont envisageables pour ladite au moins une mémoire 312, sachant que les seules contraintes sont que la zone de partage 320, où qu'elle soit située dans le noeud de calcul 302, soit accessible en lecture ou écriture par le contrôleur DMA 314 et que la zone de travail 318, où qu'elle soit située dans le noeud de calcul 302, soit accessible en lecture et écriture par le processeur 310. Il peut même être prévu que la zone de partage 320 soit configurée pour être inaccessible en lecture et écriture par le processeur 310.

Le processeur 310 est plus précisément conçu pour lire des données dans la zone de travail 318, traiter des données lues et écrire des données traitées dans la zone de travail 318. Lorsque la zone de travail 318 est un registre interne du processeur 310, les données à traiter et traitées sont respectivement directement reçues et laissées à la disposition du contrôleur DMA 314 par le processeur 310 dans son registre interne.

Dans le mode de réalisation non limitatif de la figure 3, le contrôleur DMA 314 comporte un récepteur 322 conçu pour recevoir des données fournies par l'interface 316, c'est-à-dire provenant de l'extérieur du noeud de calcul 302 via le réseau, et pour les écrire dans la zone de partage 320. Il comporte en outre un émetteur 324 conçu pour lire des données dans la zone de partage 320 et pour les écrire dans la zone de travail 318. Il comporte en outre un émetteur supplémentaire 326 conçu pour lire des données dans la zone de travail 318 et pour les transmettre à l'interface 316, c'est-à-dire vers l'extérieur du noeud de calcul 302 via le réseau, sans transiter par la zone de partage 320.

Il est en outre prévu un mécanisme de requêtes en écriture et lecture entre le processeur 310 et le contrôleur DMA 314 pour engendrer, sur requête du processeur 310, un transfert de données, par le contrôleur DMA 314, entre la zone de partage 320 et la zone de travail 318. Plus précisément, ce mécanisme comporte un mécanisme de requête en lecture par lequel le processeur 310 adresse une requête de lecture à l'émetteur 324 pour que celui-ci lise une ou plusieurs données identifiée(s) dans la zone de partage 320 et la déplace dans un espace identifié de la zone de travail 318. Il comporte également un mécanisme de requête en écriture par lequel le processeur 310 adresse une requête d'écriture à l'émetteur supplémentaire 326 pour que celui-ci lise une ou plusieurs données identifiée(s) dans la zone de travail 318 et la transmette vers un destinataire identifié à l'extérieur du noeud de calcul 302.

Le mécanisme de requêtes en écriture et lecture précité fonctionne en mode connecté, c'est-à-dire selon un mode de fonctionnement tel que chaque requête identifie une connexion préalablement établie et configurée entre le processeur 310 et un autre processeur ou bloc matériel de traitement, par exemple un processeur ou bloc matériel de traitement d'un autre noeud de calcul du système sur puce 100 que le noeud 302. Cette connexion est configurée localement pour le processeur 310 dans une table de correspondance 328, dite table de connexion, à l'aide d'un identifiant LID auquel est associé un identifiant RID de l'autre processeur ou bloc matériel de traitement partie à la connexion LID. Plus précisément, l'identifiant RID peut comporter à la fois un identifiant de l'autre processeur ou bloc matériel de traitement et un identifiant local de la connexion LID sur le noeud de calcul de cet autre processeur ou bloc matériel de traitement. La connexion LID est également identifiée dans une autre table de correspondance 330, dite table de partage, dans laquelle l'identifiant LID est associé à une zone de mémoire tampon définie dans la zone de partage 320 par une adresse de base @init, une taille T de cette zone de mémoire tampon, un pointeur d'écriture incrémentable PW pointant vers une adresse courante à partir de laquelle le récepteur 322 doit écrire lorsqu'il reçoit une ou plusieurs données provenant de l'extérieur et un pointeur de lecture incrémentable PR pointant vers une adresse courante à partir de laquelle l'émetteur 324 doit lire lorsqu'il reçoit une requête en lecture. Cette zone de mémoire tampon fonctionne de façon connue en soi comme un buffer circulaire. On notera que les tables de connexion et de partage 328, 330 sont illustrées comme internes au contrôleur DMA 314, mais ce n'est pas une nécessité. Elles font d'une façon générale partie de l'espace mémoire du noeud de calcul 302 identifié par la référence 312, même si par souci de clarté elles n'ont pas été représentées comme incluses dans cet espace.

Grâce à ce système d'identifiants LID, le contrôleur DMA 314 est apte à gérer plusieurs connexions en parallèle et en toute indépendance les unes des autres, ces connexions correspondant à plusieurs paires de type [émetteur ; récepteur]. Il crée pour cela autant de zones de mémoires tampons que nécessaire et possible dans la zone de partage 320.

Le mécanisme de requêtes en écriture et lecture précité fonctionne également optionnellement mais avantageusement en mode régulé, c'est-à-dire selon un mode de fonctionnement tel que les communications traitées en flot de données sont régulées à l'aide d'un mécanisme de crédits pour éviter toute saturation de mémoire tampon en réception. Conformément à ce mécanisme de crédit, un gestionnaire de crédits 332 est implémenté dans le contrôleur DMA 314. Son fonctionnement peut d'une façon générale être conforme à l'enseignement de la demande de brevet EP 1 641 197 A1. Plus précisément et dans le contexte du mode de réalisation de la figure 3, il fonctionne de la façon suivante :
- en mode de réception de données du noeud de calcul 302 dans le contexte d'une connexion LID, il est avantageusement relié en communication avec l'émetteur 324, lui-même ayant accès à la table de partage 330, et en accès aux données de la table de connexion 328, pour pouvoir envoyer des crédits au noeud de calcul émetteur de données via l'interface 316, à l'initialisation de la connexion ou en cours de communication, en fonction de l'état de la zone de mémoire tampon créée en zone de partage 320 pour la connexion LID : taille T de cette zone de mémoire tampon à l'initialisation et crédits supplémentaires en cours de communication lorsque des données de cette zone de mémoire tampon sont libérées,
- en mode d'émission de données du noeud de calcul 302 dans le contexte d'une connexion LID, il est avantageusement relié en communication avec l'émetteur supplémentaire 326 et en accès aux données d'une table de crédit 334, pour pouvoir associer l'identifiant LID à un compteur de crédits disponibles, ce compteur étant susceptible d'être mis à jour à chaque émission de données par l'émetteur supplémentaire 326 et à chaque réception de nouveaux crédits via l'interface 316.

On notera qu'un mécanisme de seuil peut être mis en oeuvre en mode de réception de données pour n'envoyer de nouveaux crédits qu'à partir d'un minimum prédéterminé afin de limiter le trafic sur réseau. En mode d'émission de données, on comprend que le lien entre le gestionnaire de crédits 332 et l'émetteur supplémentaire 326 permet de réguler les envois de données en fonction des capacités de réception à chaque instant sans nécessiter l'intervention d'un arbitre dans le système sur puce 100.

On notera aussi que la table de crédits 334 est illustrée comme interne au contrôleur DMA 314, mais ce n'est pas une nécessité. Elle fait d'une façon générale partie de l'espace mémoire du noeud de calcul 302 identifié par la référence 312, même si par souci de clarté elle n'a pas été représentée comme incluse dans cet espace.

On notera enfin que le mode de réalisation qui vient d'être détaillé en référence à la figure 3 permet de solliciter la zone de partage 320 du côté du noeud de calcul récepteur tout en la court-circuitant du côté du noeud de calcul émetteur lors d'un échange de données entre deux processeurs ou blocs matériels de traitement de noeuds de calculs différents.

De façon alternative, le mode de réalisation qui va maintenant être détaillé en référence à la figure 4 permet de solliciter la zone de partage du côté du noeud de calcul émetteur tout en la court-circuitant du côté du noeud de calcul récepteur lors d'un échange de données entre deux processeurs ou blocs matériels de traitement de noeuds de calculs différents.

Conformément à ce deuxième mode de réalisation, l'un des noeuds de calculs du système sur puce 100 est identifié schématiquement sur la figure 4 par la référence générique 402. Il s'agit également d'un noeud de calcul à processeur. Ce noeud de calcul 402 comporte ainsi au moins un processeur 410 de traitement de données, au moins une mémoire 412 pour le stockage de données, un contrôleur 414 d'accès direct en mémoire, dit contrôleur DMA 414, et une interface 416 d'entrée/sortie de données.

Comme dans le mode de réalisation précédent et sans que cela ne soit limitatif, un seul processeur 410 est illustré et la mémoire 412 est représentée comme comportant une première mémoire 418, ou zone de mémoire, dite zone de travail, à laquelle le processeur 410 peut accéder en lecture et écriture, et une deuxième mémoire 420, ou zone de mémoire, dite zone de partage, à laquelle le contrôleur DMA 414 peut accéder en lecture ou écriture. Il peut également être prévu que la zone de partage 420 soit configurée pour être inaccessible en lecture et écriture par le processeur 410.

Dans le mode de réalisation non limitatif de la figure 4, le contrôleur DMA 414 comporte un émetteur 422 conçu pour lire des données dans la zone de partage 420 et pour les transmettre à l'interface 416, c'est-à-dire vers l'extérieur du noeud de calcul 402 via le réseau. Il comporte en outre un récepteur 424 conçu pour lire des données dans la zone de travail 418 et pour les écrire dans la zone de partage 420. Il comporte en outre un récepteur supplémentaire 426 conçu pour recevoir des données fournies par l'interface 416, c'est-à-dire provenant de l'extérieur du noeud de calcul 402 via le réseau, et pour les écrire dans la zone de travail 418 sans transiter par la zone de partage 420.

Il est en outre prévu comme précédemment un mécanisme de requêtes en écriture et lecture entre le processeur 410 et le contrôleur DMA 414 pour engendrer, sur requête du processeur 410, un transfert de données, par le contrôleur DMA 414, entre la zone de partage 420 et la zone de travail 418. Plus précisément, ce mécanisme comporte un mécanisme de requête en écriture par lequel le processeur 410 adresse une requête d'écriture au récepteur 424 pour que celui-ci lise une ou plusieurs données identifiée(s) dans la zone de travail 418 et la déplace dans un espace identifié de la zone de partage 420. Il comporte également un mécanisme de requête en lecture par lequel le processeur 410 adresse une requête de lecture au récepteur supplémentaire 426 pour que celui-ci reçoive une ou plusieurs données provenant d'un émetteur identifié à l'extérieur du noeud de calcul 402 et la copie directement dans la zone de travail 418 sans transiter par la zone de partage 420.

Le mécanisme de requêtes en écriture et lecture précité fonctionne en mode connecté, c'est-à-dire selon un mode de fonctionnement tel que chaque requête identifie une connexion préalablement établie et configurée entre le processeur 410 et un autre processeur ou bloc matériel de traitement, par exemple un processeur ou bloc matériel de traitement d'un autre noeud de calcul du système sur puce 100 que le noeud 402. Cette connexion est configurée localement pour le processeur 410 dans une table de connexion 428 à l'aide d'un identifiant LID auquel est associé un identifiant RID de l'autre processeur ou bloc matériel de traitement partie à la connexion LID (cet identifiant RID comportant à la fois un identifiant de l'autre processeur ou bloc matériel de traitement et un identifiant local de la connexion LID sur le noeud de calcul de cet autre processeur ou bloc matériel de traitement). La connexion LID est également identifiée dans une table de partage 430 dans laquelle l'identifiant LID est associé à une zone de mémoire tampon définie dans la zone de partage 420 par une adresse de base @init, une taille T de cette zone de mémoire tampon, un pointeur d'écriture incrémentable PW pointant vers une adresse courante à partir de laquelle le récepteur 424 doit écrire lorsqu'il reçoit une requête en écriture et un pointeur de lecture incrémentable PR pointant vers une adresse courante à partir de laquelle l'émetteur 422 doit lire lorsqu'il doit émettre une ou plusieurs données vers l'extérieur

Grâce à ce système d'identifiants LID, le contrôleur DMA 414 est apte à gérer plusieurs connexions en parallèle correspondant à plusieurs paires de type [émetteur ; récepteur]. Il crée pour cela autant de zones de mémoires tampons que nécessaire dans la zone de partage 420.

Le mécanisme de requêtes en écriture et lecture précité fonctionne également optionnellement mais avantageusement en mode régulé. Comme dans le premier mode de réalisation, un gestionnaire de crédits 432 peut être implémenté dans le contrôleur DMA 414. Son fonctionnement peut d'une façon générale être conforme à l'enseignement de la demande de brevet EP 1 641 197 A1. Plus précisément et dans le contexte du mode de réalisation de la figure 4, il peut fonctionner de la façon suivante :
- en mode de réception de données du noeud de calcul 402 dans le contexte d'une connexion LID, il n'est pas sollicité,
- en mode d'émission de données du noeud de calcul 402 dans le contexte d'une connexion LID, il peut être relié en communication avec l'émetteur 422 et le récepteur 424, eux-mêmes ayant accès à la table de partage 430, et en accès aux données d'une table de crédit 434, pour pouvoir associer l'identifiant LID à un compteur de crédits disponibles, ce compteur étant susceptible d'être crédité à l'initialisation de la connexion ou en cours de communication, en fonction de l'état de la zone de mémoire tampon créée en zone de partage 420 pour la connexion LID, puis mis à jour à chaque écriture de données par le récepteur 424 et à chaque réception de nouveaux crédits en cas de libération d'au moins une partie de la zone de mémoire tampon.

Comme précédemment, un mécanisme de seuil peut être mis en oeuvre pour n'envoyer de nouveaux crédits qu'à partir d'un minimum prédéterminé.

Il convient de remarquer cependant que la régulation peut aussi se faire sans l'aide d'un gestionnaire de crédits dans ce deuxième mode de réalisation puisque la zone de partage exploitée est du côté de l'émetteur. Elle peut donc en variante être traitée localement par une simple gestion classique de la zone de partage 420 sans qu'il n'y ait besoin de transmettre de crédits depuis le noeud récepteur vers le noeud émetteur.

Selon un troisième mode de réalisation non illustré, un noeud de calcul à processeur selon l'invention peut comporter les fonctionnalités combinées des premier et deuxième modes de réalisation détaillés précédemment. En d'autres termes, les éléments 322 et 422, peuvent être à la fois récepteur et émetteur, aptes à échanger entre la zone de partage 320, 420 et l'extérieur du noeud de calcul considéré ; les éléments 324 et 424, peuvent être à la fois émetteur et récepteur, aptes à échanger entre la zone de partage 320, 420 et la zone de travail 318, 418 ; enfin les éléments 326 et 426 peuvent être à la fois émetteur supplémentaire et récepteur supplémentaire, aptes à échanger directement entre l'extérieur du noeud de calcul considéré et la zone de travail 318, 418, sans transiter par la zone de partage 320, 420.

Ce troisième mode de réalisation d'un noeud de calcul, éventuellement combiné aux deux premiers dans le système sur puce 100, permet de solliciter la zone de partage d'un noeud de calcul intermédiaire autre que les noeuds émetteur et récepteur tout en la court-circuitant du côté des noeuds de calculs émetteur et récepteur lors d'un échange de données entre deux processeurs ou blocs matériels de traitement de noeuds de calculs différents.

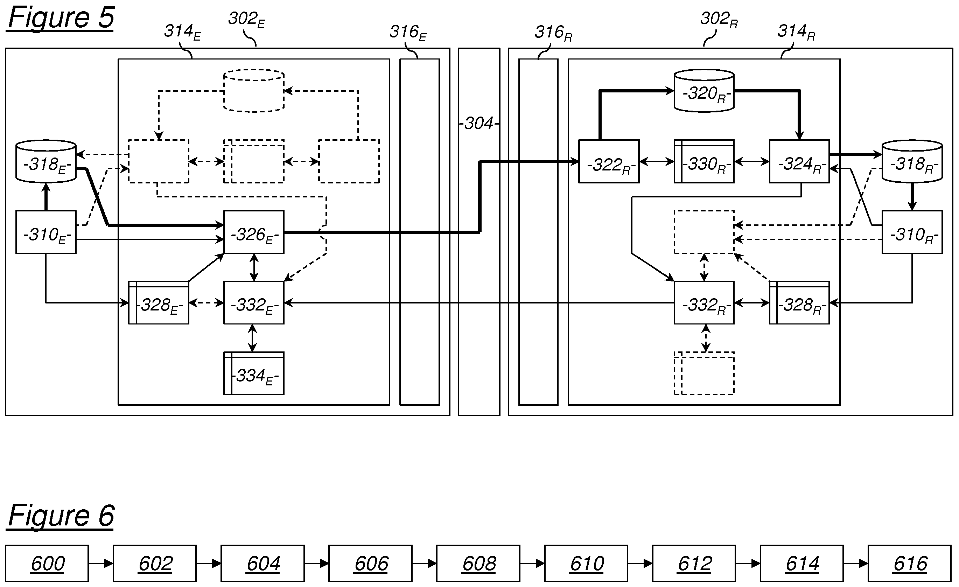

Un transfert de données entre deux noeuds de calculs conformes à la structure générale du premier mode de réalisation de la figure 3 va maintenant être détaillé en référence aux figures 5 et 6. Selon cette structure, c'est la zone de partage du côté du noeud de calcul récepteur qui est utilisée, celle du côté émetteur étant court-circuitée. La figure 5 illustre plus précisément les éléments sollicités du côté du noeud de calcul émetteur, identifié par la référence 302_{E}, et du côté du noeud de calcul récepteur, identifié par la référence 302_{R}, les autres éléments étant représentés en pointillés. Les mêmes références que dans la figure 3 sont utilisées, avec un indice « E » pour identifier les éléments du noeud de calcul émetteur 302_{E} et indice « R » pour identifier les éléments du noeud de calcul récepteur 302_{R}. La figure 6 illustre les étapes successives de ce transfert de données.

Au cours d'une étape d'initialisation 600, une connexion est créée entre le processeur 310_{E} du noeud de calcul émetteur 302_{E} et le processeur 310_{R} du noeud de calcul récepteur 302_{R}, pour la transmission de données depuis la zone de travail 318_{E} du processeur 310_{E} vers la zone de travail 318_{R} du processeur 310_{R}. Du côté du noeud de calcul émetteur 302_{E}, cette connexion est identifiée LID_{E} et est associée à un identifiant RID_{E} du processeur 310_{R} dans la table de connexion 328_{E}. Du côté du noeud de calcul récepteur 302_{R} cette connexion est identifiée LID_{R} et est associée à un identifiant RID_{R} du processeur 310_{E} dans la table de connexion 328_{R}. Comme vu précédemment, l'identifiant RID_{E} peut inclure l'identifiant LID_{R} et l'identifiant RID_{R} peut inclure l'identifiant LID_{E}.

Au cours d'une étape suivante 602 de réservation d'espace mémoire, le processeur 310_{R} envoie une requête à l'émetteur 324_{R} pour créer une zone de mémoire tampon spécifique à la connexion LID_{R} dans la zone de partage 320_{R}. Cette zone de mémoire tampon est définie et maintenue à jour dans la table de partage 330_{R} à l'aide d'une adresse @init, une taille T, un pointeur d'écriture PW et un pointeur de lecture PR.

Ensuite, au cours d'une étape 604 d'envoi de premiers crédits, le gestionnaire de crédits 332_{R} envoie des crédits au gestionnaire de crédits 332_{E} pour un équivalent en crédits de taille T disponible. Ce dernier les enregistre dans sa table de crédits 334_{E} en relation avec la connexion LID_{E}.

Au cours d'une étape 606 suivante, le processeur 310_{E} envoie une requête d'écriture à l'émetteur supplémentaire 326_{E} pour que celui-ci lise des données identifiées dans la zone de travail 318_{E} et les transmette vers la zone de travail 318_{R} du processeur 310_{R}. Cette requête peut être bloquante (i.e. l'émetteur supplémentaire 326_{E} refuse de recevoir toute autre requête tant qu'il n'a pas traité celle-ci) ou non bloquante (i.e. l'émetteur supplémentaire 326_{E} place cette requête dans une mémoire FIFO, par exemple créée à cet effet pour le processeur 310_{E}, et traite les requêtes de cette mémoire FIFO dans leur ordre d'arrivée).

Différents types de requêtes peuvent être envisagés.

Par exemple, la requête peut être directe. Une requête d'écriture est qualifiée de directe si elle inclut les données qu'elle veut envoyer (un mot mémoire, un octet, ...), notamment lorsqu'elles proviennent d'un registre du processeur 310_{E}. L'écriture se fait alors à une adresse fixe qui contient un champ LID_{E} permettant d'identifier la connexion. En termes de format, un bit de poids fort peut indiquer qu'il s'agit d'une écriture, des bits suivants peuvent indiquer le type de la requête, un bit « flag » peut être utilisé pour notifier le processeur 310_{E} lorsque la requête a été traitée, les autres bits de poids faibles identifiant la connexion LID_{E} et contenant les données.

Par exemple également, la requête peut être indirecte. Une requête d'écriture est qualifiée d'indirecte si elle n'inclut pas les données qu'elle veut envoyer. La requête inclut alors seulement un identifiant de l'adresse mémoire à partir de laquelle les données doivent être lues dans la zone de travail 318_{E} et une indication de la taille des données à lire. Là encore, un espace d'adressage adéquat permet d'identifier la connexion. En termes de format, un bit de poids fort peut indiquer qu'il s'agit d'une écriture, des bits suivants peuvent indiquer le type de la requête, un bit « flag » peut être utilisé pour notifier le processeur 310_{E} lorsque la requête a été traitée, les autres bits de poids faibles identifiant la connexion LID_{E}, l'adresse mémoire à partir de laquelle les données doivent être lues dans la zone de travail 318_{E} et la taille des données à lire. On notera que la requête peut être subdivisée en deux sous-requêtes, l'une identifiant l'adresse mémoire à partir de laquelle les données doivent être lues, l'autre donnant la taille des données à lire.

Pour le traitement effectif de la requête, l'émetteur supplémentaire 326_{E} interroge le gestionnaire de crédits 332_{E} lors d'une étape 608 pour savoir s'il dispose de suffisamment de crédits dans la table de crédits 334_{E} en relation avec la connexion LID_{E}. Tant que les crédits sont insuffisants, la requête reste en suspens.

S'il y a suffisamment de crédits, le procédé passe alors à une étape 610 au cours de laquelle le compteur de crédits de la table de 334_{E} est décrémenté d'un nombre de crédits correspondant à la taille des données concernées par la requête. Puis les données sont envoyées par l'émetteur supplémentaire 326_{E} vers le destinataire RID_{E} identifié dans la table de connexion 328_{E}. Au cours de cette étape, les données transitent par le réseau du système sur puce 100, identifié par la référence générale 304, sont reçues par l'interface 316_{R} du noeud de calcul récepteur 302_{R}, puis par le récepteur 322_{R}.

Au cours d'une étape suivante 612, le récepteur 322_{R} écrit les données reçues dans la zone de partage 320_{R}, plus précisément dans la zone de mémoire tampon associée à la connexion LID_{R} identifiée dans la table de partage 330_{R}.

Lors d'une étape 614, le processeur 310_{R} envoie une requête de lecture à l'émetteur 324_{R}, cette requête identifiant la connexion LID_{R} pour lire les données reçues dans la zone de partage 320_{R} et les écrire dans la zone de travail 318_{R}. Cette étape 614 peut être initiée indépendamment des étapes précédentes 606 à 612 mais ne peut bien sûr terminer son exécution qu'après l'étape 612.

Là encore, différents types de requêtes peuvent être envisagés.

Par exemple, la requête peut être directe. Une requête de lecture est qualifiée de directe si elle réserve un champ pour les données qu'elle veut recevoir (un mot mémoire, un octet, ...), notamment lorsqu'elles sont destinées à être écrites par l'émetteur 324_{R} directement dans un registre du processeur 310_{R}. La lecture se fait alors à une adresse fixe qui contient un champ LID_{E} permettant d'identifier la connexion. Les données correspondantes sont extraites de la zone de mémoire tampon de la zone de partage 320_{R} par l'émetteur 324_{R} et le pointeur de lecture PE est incrémenté en conséquence. En termes de format, un bit de poids fort peut indiquer qu'il s'agit d'une lecture, des bits suivants peuvent indiquer le type de la requête, un bit « flag » peut être utilisé pour notifier le processeur 310_{R} lorsque la requête a été traitée, les autres bits de poids faibles identifiant la connexion LID_{E} et réservant un espace pour les données à lire.

Par exemple également, la requête peut être indirecte. Une requête de lecture est qualifiée d'indirecte si elle ne réserve pas de champ pour les données qu'elle veut recevoir. La requête inclut alors seulement un identifiant de l'adresse mémoire à partir de laquelle les données doivent être écrites dans la zone de travail 318_{R} et une indication de la taille des données attendues. Là encore, un espace d'adressage adéquat permet d'identifier la connexion. En termes de format, un bit de poids fort peut indiquer qu'il s'agit d'une lecture, des bits suivants peuvent indiquer le type de la requête, un bit « flag » peut être utilisé pour notifier le processeur 310_{R} lorsque la requête a été traitée, les autres bits de poids faibles identifiant la connexion LID_{E}, l'adresse mémoire à partir de laquelle les données doivent être écrites dans la zone de travail 318_{R} et la taille des données à écrire. On notera que la requête peut être subdivisée en deux sous-requêtes, l'une identifiant l'adresse mémoire à partir de laquelle les données doivent être écrites, l'autre donnant la taille des données à écrire.

Enfin, au cours d'une étape 616, le contrôleur DMA 314_{R} (plus précisément son émetteur 324_{R} qui en informe alors le gestionnaire de crédits 332_{R}) peut libérer de l'espace mémoire dans la zone de mémoire tampon relative à la connexion LID_{R}. Le gestionnaire de crédits 332_{R} transmet alors (après avoir consulté la table de connexion 328_{R}) cette information de nouveaux crédits au gestionnaire de crédits 332_{E} qui met à jour sa table de crédits 334_{E}. Cette étape peut s'exécuter indépendamment des étapes 606 à 614.

Conformément au fonctionnement qui vient d'être décrit pour un transfert de données, on notera que l'émetteur supplémentaire 326_{E}, le récepteur 322_{R} et l'émetteur 324_{R} sollicités peuvent être conçus sous la forme de blocs matériels formant des machines à états finis. Par exemple, en ce qui concerne l'émetteur supplémentaire 326_{E}, il peut comporter un décodeur de requêtes, un démultiplexeur apte à distribuer les requêtes dans des mémoires FIFO dédiées comme indiqué précédemment, un sélectionneur de requête dont le fonctionnement bien connu ne sera pas détaillé, un module matériel d'interrogation du gestionnaire de crédits 332_{E}, un module matériel de traitement effectif de la requête apte à accéder à la table de connexion 328_{E} et un module matériel de récupération de données apte à extraire et encapsuler les données à transmettre. Par exemple également, en ce qui concerne l'émetteur 324_{R}, il peut comporter un décodeur de requêtes, un démultiplexeur apte à distribuer les requêtes dans des mémoires FIFO dédiées, un sélectionneur de requête, un module matériel de mise à jour de crédits, un module matériel de traitement effectif de la requête et un module matériel de récupération de données apte à extraire les données souhaitées de la zone de partage 320_{R} et à les écrire dans la zone de travail 318_{R}.

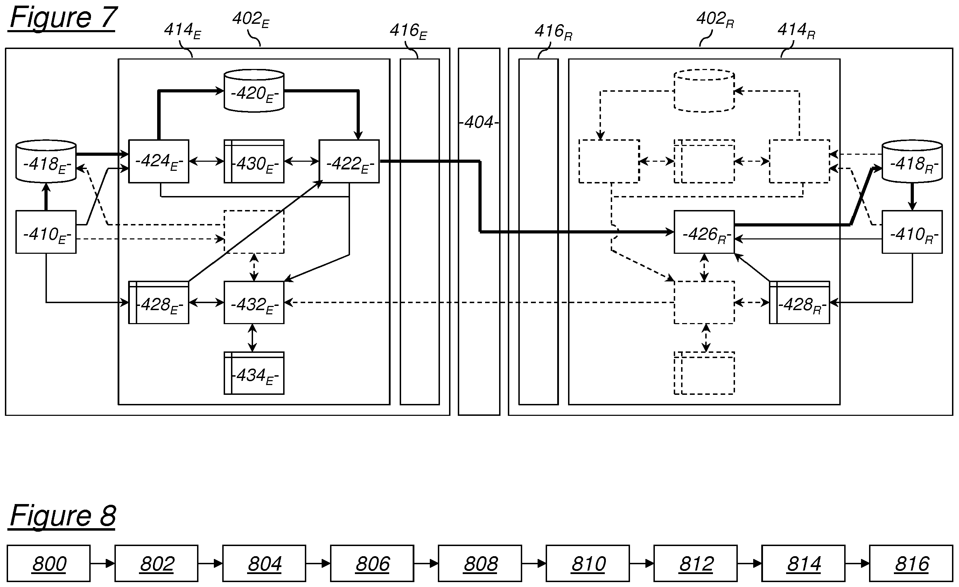

Un transfert de données entre deux noeuds de calculs conformes à la structure générale du deuxième mode de réalisation de la figure 4 va maintenant être détaillé en référence aux figures 7 et 8. Selon cette structure, c'est la zone de partage du côté du noeud de calcul émetteur qui est utilisée, celle du côté récepteur étant court-circuitée. La figure 7 illustre plus précisément les éléments sollicités du côté du noeud de calcul émetteur, identifié par la référence 402_{E}, et du côté du noeud de calcul récepteur, identifié par la référence 402_{R}, les autres éléments étant représentés en pointillés. Les mêmes références que dans la figure 4 sont utilisées, avec un indice « E » pour identifier les éléments du noeud de calcul émetteur 402_{E} et indice « R » pour identifier les éléments du noeud de calcul récepteur 402_{R}. La figure 8 illustre les étapes successives de ce transfert de données.

Au cours d'une étape d'initialisation 800, une connexion est créée entre le processeur 410_{E} du noeud de calcul émetteur 402_{E} et le processeur 410R du noeud de calcul récepteur 402_{R}, pour la transmission de données depuis la zone de travail 418_{E} du processeur 410_{E} vers la zone de travail 418_{R} du processeur 410_{R}. Du côté du noeud de calcul émetteur 402_{E} cette connexion est identifiée LID_{E} et est associée à un identifiant RID_{E} du processeur 410_{R} dans la table de connexion 428_{E}. Du côté du noeud de calcul récepteur 402_{R} cette connexion est identifiée LID_{R} et est associée à un identifiant RID_{R} du processeur 410_{E} dans la table de connexion 428_{R}. Comme vu précédemment, l'identifiant RID_{E} peut inclure l'identifiant LID_{R} et l'identifiant RID_{R} peut inclure l'identifiant LID_{E}.

Au cours d'une étape suivante 802 de réservation d'espace mémoire, le processeur 410_{E} envoie une requête au récepteur 424_{E} pour créer une zone de mémoire tampon spécifique à la connexion LID_{E} dans la zone de partage 420_{E}. Cette zone de mémoire tampon est définie et maintenue à jour dans la table de partage 430_{E} à l'aide d'une adresse @init, une taille T, un pointeur d'écriture PW et un pointeur de lecture PR.

Ensuite, au cours d'une étape 804 d'envoi de premiers crédits, le gestionnaire de crédits 432_{E} reçoit des crédits, par exemple de la part du récepteur 424_{E}, pour un équivalent en crédits de taille T disponible. Il les enregistre dans sa table de crédits 434_{E} en relation avec la connexion LID_{E}.

Au cours d'une étape 806 suivante, le processeur 410_{E} envoie une requête d'écriture au récepteur 424_{E} pour que celui-ci lise des données identifiées dans la zone de travail 418_{E} et les transmette vers la zone de travail 418_{R} du processeur 410_{R}. Cette requête peut être bloquante ou non bloquante.

Comme dans le mode de réalisation de la figure 5, la requête peut être directe ou indirecte et présenter le même formalisme.

Pour le traitement effectif de la requête, le récepteur 424_{E} interroge le gestionnaire de crédits 432_{E} lors d'une étape 808 pour savoir s'il dispose de suffisamment de crédits dans la table de crédits 434_{E} en relation avec la connexion LID_{E}. Tant que les crédits sont insuffisants, la requête reste en suspens.

S'il y a suffisamment de crédits, le procédé passe alors à une étape 810 au cours de laquelle le compteur de crédits de la table de 434_{E} est décrémenté d'un nombre de crédits correspondant à la taille des données concernées par la requête. Puis les données sont lues dans la zone de travail 418_{E} par le récepteur 424_{E} pour être écrites dans la zone de partage 420_{E}, plus précisément dans la zone de mémoire tampon associée à la connexion LID_{E} identifiée dans la table de partage 430_{E}.

Lors d'une étape 812, le processeur 410_{R} envoie une requête de lecture au récepteur supplémentaire 426_{R}, cette requête identifiant la connexion LID_{R}, et donc la connexion LID_{E} côté émetteur (grâce aux données de la table de connexion 428_{R}), pour lire les données souhaitées dans la zone de partage 420_{E} et les écrire dans la zone de travail 418_{R}. Cette étape 812 peut être initiée indépendamment des étapes précédentes 806 à 810 mais ne peut bien sûr terminer son exécution qu'après l'étape 810.

Là encore, la requête peut être directe ou indirecte et présenter le même formalisme que dans le mode de réalisation de la figure 5.

Au cours d'une étape suivante 814, l'émetteur 422_{E} lit les données souhaitées dans la zone de partage 420_{E}, plus précisément dans la zone de mémoire tampon associée à la connexion LID_{E} identifiée dans la table de partage 430_{E}, pour les transmettre vers le destinataire RID_{E} identifié dans la table de connexion 428_{E}. Au cours de cette étape, les données transitent par le réseau du système sur puce 100, identifié par la référence générale 404, sont reçues par l'interface 416_{R} du noeud de calcul récepteur 402_{R}, puis par le récepteur supplémentaire 426_{R} qui les écrit directement dans la zone de travail 418_{R}.

Enfin, au cours d'une étape 816, le contrôleur DMA 414_{E} (plus précisément son émetteur 422_{E} qui en informe alors le gestionnaire de crédits 432_{E}) peut libérer de l'espace mémoire dans la zone de mémoire tampon relative à la connexion LID_{E} et délivrer ainsi de nouveaux crédits correspondants. Le gestionnaire de crédits 432_{E} met alors à jour sa table de crédits 434_{E}. Cette étape peut s'exécuter indépendamment des étapes 806 à 814.

Conformément au fonctionnement qui vient d'être décrit pour un transfert de données, on notera que le récepteur 424_{E}, l'émetteur 422_{E}, et le récepteur supplémentaire 326_{R} sollicités peuvent être conçus sous la forme de blocs matériels formant des machines à états finis.

On notera également que le gestionnaire de crédits 432_{E} est sollicité aux étapes 804, 808, 810 et 816 mais qu'il peut être remplacé aisément par une simple gestion locale de la zone de partage 420_{E}.

Un transfert de données entre deux noeuds de calculs conformes à la structure générale du troisième mode de réalisation évoqué précédemment mais non illustré, c'est-à-dire un transfert de données dans lequel la zone de partage d'un noeud de calcul intermédiaire autre que les noeuds émetteur et récepteur peut être sollicitée tout en court-circuitant les zones de partage du côté des noeuds de calculs émetteur et récepteur, se déduit sans aucune difficulté technique d'une combinaison des transferts de données illustrés dans les figures 5 et 7. Il ne sera donc pas détaillé puisqu'à la portée de l'homme du métier.

On notera par ailleurs que les étapes des procédés illustrés dans les figures 6 et 8 peuvent être mise en oeuvre par programme d'ordinateur et être centralisées ou distribuées sur un ou plusieurs processeurs du système sur puce 100.

Enfin, les modes de réalisation décrits précédemment sont compatibles avec un système sur puce dans lequel certains noeuds de calculs sont à blocs matériels de traitement, pour des échanges de données entre processeurs de noeuds de calculs différents, entre blocs matériels de traitement de noeuds de calculs différents ou entre processeurs et blocs matériels de traitement de noeuds de calculs différents. En d'autres termes, l'enseignement de la présente invention est compatible avec l'enseignement de la demande de brevet EP 1 641 197 A1.

Il apparaît clairement qu'un système sur puce tel que celui décrit précédemment permet d'atteindre des performances élevées en termes de latence et consommation tout en délestant le plus possible ses processeurs des accès en mémoires. Il est en outre particulièrement adapté pour les traitements de communications en flot de données et est compatible avec l'enseignement avantageux de la demande de brevet EP 1 641 197 A1.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Système sur puce (100) comportant une pluralité de noeuds de calculs (102A, ..., 102P) interconnectés en réseau, dans lequel au moins un noeud de calcul (302 ; 402) comporte :
- au moins une mémoire (312 ; 412),
- au moins un processeur (310 ; 410) de traitement de données conçu pour lire des données dans une zone de travail (318 ; 418) de ladite au moins une mémoire (312 ; 412), traiter des données lues et écrire des données traitées dans la zone de travail (318 ; 418),
- un contrôleur (314 ; 414) d'accès direct en mémoire comportant :
• un récepteur (322) conçu pour recevoir des données provenant de l'extérieur du noeud de calcul (302) via le réseau et pour les écrire dans une zone de partage (320) de ladite au moins une mémoire (312), ou
• un émetteur (422) conçu pour lire des données dans ladite zone de partage (420) et pour les transmettre vers l'extérieur du noeud de calcul (402) via le réseau,
et dans lequel il est prévu un mécanisme de requêtes en écriture et lecture entre le contrôleur (314 ; 414) d'accès direct en mémoire et le processeur (310 ; 410) pour engendrer, sur requête du processeur (310 ; 410), un transfert de données, par le contrôleur (314 ; 414) d'accès direct en mémoire, entre la zone de partage (320 ; 420) et la zone de travail (318 ; 418) de ladite au moins une mémoire (312 ; 412), **caractérisé en ce que** le contrôleur (314 ; 414) d'accès direct en mémoire comporte en outre un dispositif émetteur (326) ou récepteur (426) supplémentaire conçu pour échanger des données entre l'extérieur du noeud de calcul (302 ; 402) via le réseau et la zone de travail (318 ; 418) du processeur (310 ; 410), sans transiter par la zone de partage (320 ; 420).

2. Système sur puce (100) selon la revendication 1, dans lequel le contrôleur (314 ; 414) d'accès direct en mémoire dudit au moins un noeud de calcul (302 ; 402) comporte :
- le récepteur (322) conçu pour recevoir des données provenant de l'extérieur du noeud de calcul (302) via le réseau et pour les écrire dans la zone de partage (320),
- l'émetteur (422) conçu pour lire des données dans ladite zone de partage (420) et pour les transmettre vers l'extérieur du noeud de calcul (402), et
- un dispositif (326 ; 426) émetteur et récepteur supplémentaire conçu pour échanger des données entre l'extérieur du noeud de calcul (302; 402) via le réseau et la zone de travail (318; 418) du processeur (310 ; 410), sans transiter par la zone de partage (320 ; 420).

3. Système sur puce (100) selon la revendication 1 ou 2, dans lequel ladite au moins une mémoire dudit au moins un noeud de calcul (302 ; 402) comporte :
- une table de connexion (328 ; 428) définie de manière à associer, pour chaque connexion impliquant l'un dudit au moins un processeur (310 ; 410) et établie pour échanger des données avec un autre processeur ou bloc matériel de traitement extérieur audit au moins un noeud de calcul (302 ; 402), un identifiant de cette connexion à un identifiant de cet autre processeur ou bloc matériel de traitement extérieur, et
- une table de partage (330 ; 430) définie de manière à associer chaque identifiant de connexion à une zone de mémoire tampon réservée pour cette connexion dans la zone de partage (320 ; 420).

4. Système sur puce (100) selon la revendication 1 ou 2, dans lequel :
- les communications entre noeuds de calculs (102A, ..., 102P) sont traitées en flot de données,
- ladite au moins une mémoire dudit au moins un noeud de calcul (302 ; 402) comporte une table de crédits (334 ; 434) définie de manière à associer chaque identifiant de connexion à un compteur de crédits disponibles pour cette connexion, et
- le contrôleur d'accès direct en mémoire (314 ; 414) dudit au moins un noeud de calcul (302 ; 402) comporte un gestionnaire de crédits (332 ; 432) pour la mise à jour du compteur de crédits de chaque connexion en cours en fonction des échanges réalisés pendant cette connexion.

5. Système sur puce (100) selon les revendications 3 et 4, dans lequel le gestionnaire de crédits (332 ; 432) est conçu pour initialiser chaque compteur de crédits en fonction de la taille de la zone de mémoire tampon réservée pour chaque connexion.

6. Système sur puce (100) selon l'une quelconque des revendications 1 à 5, dans lequel au moins l'un des éléments suivants dudit au moins noeud de calcul (302 ; 402) :
- le récepteur (322) conçu pour recevoir des données provenant de l'extérieur du noeud de calcul via le réseau et pour les écrire dans la zone de partage, ou
- l'émetteur (422) conçu pour lire des données dans ladite zone de partage et pour les transmettre vers l'extérieur du noeud de calcul via le réseau, et
- le dispositif émetteur (326) ou récepteur (426) supplémentaire conçu pour échanger des données entre l'extérieur du noeud de calcul via le réseau et la zone de travail du processeur sans transiter par la zone de partage,
est conçu sous la forme d'un bloc matériel formant une machine à états finis.

7. Système sur puce (100) selon l'une quelconque des revendications 1 à 6, dans lequel la zone de travail (318 ; 418) de ladite au moins une mémoire (312 ; 412) comporte un registre interne au processeur (310 ; 410).

8. Système sur puce (100) selon l'une quelconque des revendications 1 à 7, dans lequel la zone de partage (320 ; 420) est configurée pour être inaccessible en lecture et écriture par le processeur (310 ; 410).

9. Procédé d'échange de données entre un noeud de calcul émetteur (302_{E} ; 402_{E}) et un noeud de calcul récepteur (302_{R} ; 402_{R}) d'un système sur puce (100) comportant une pluralité de noeuds de calculs (102A, ..., 102P) interconnectés en réseau (304 ; 404), au moins l'un des noeuds de calcul émetteur et récepteur comportant :
- au moins une mémoire,
- au moins un processeur (310_{E}, 310_{R} ; 410_{E}, 410_{R}) de traitement de données conçu pour lire des données dans une zone de travail (318_{E}, 318_{R} ; 418_{E}, 418_{R}) de ladite au moins une mémoire, traiter des données lues et écrire des données traitées dans la zone de travail,
- un contrôleur (314_{E}, 314_{R} ; 414_{E}, 414_{R}) d'accès direct en mémoire comportant :
• un récepteur (322_{R}) conçu pour recevoir des données provenant de l'extérieur du noeud de calcul (302_{R}) via le réseau (304) et pour les écrire dans une zone de partage (320_{R}) de ladite au moins une mémoire, ou
• un émetteur (422_{E}) conçu pour lire des données dans ladite zone de partage (420_{E}) et pour les transmettre vers l'extérieur du noeud de calcul (402_{E}) via le réseau (404),
le procédé prévoyant un mécanisme de requêtes en écriture (606 ; 806) et lecture (614 ; 812) entre le contrôleur (314_{E}, 314_{R} ; 414_{E}, 414_{R}) d'accès direct en mémoire et le processeur (310_{E}, 310_{R} ; 410_{E}, 410_{R}) d'un même noeud de calcul pour engendrer, sur requête du processeur (310_{E}, 310_{R} ; 410_{E}, 410_{R}), un transfert de données (614 ; 810), par le contrôleur (314_{E}, 314_{R} ; 414_{E}, 414_{R}) d'accès direct en mémoire, entre la zone de partage (320_{R} ; 420_{E}) et la zone de travail (318_{R} ; 418_{E}) de ladite au moins une mémoire,
**caractérisé en ce que**, lors d'un échange de données, au moins l'un (302_{E} ; 402_{R}) desdits noeuds de calculs émetteur et récepteur sollicite un dispositif émetteur ou récepteur supplémentaire (326_{E}; 426_{R}) de son contrôleur (314_{E} ; 414_{R}) d'accès direct en mémoire pour échanger les données entre l'extérieur de ce noeud de calcul (302_{E} ; 402_{R}) via le réseau (304 ; 404) et la zone de travail (318_{E} ; 418_{R}) de son processeur (310_{E} ; 410_{R}), sans transiter par sa zone de partage (320_{E} ; 420_{R}).

10. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé d'échange de données entre noeuds de calculs (102A, ..., 102P) d'un système sur puce (100) selon la revendication 9, lorsque ledit programme est exécuté par un noeud de calcul du système sur puce.
